# EUROPEAN PATENT SPECIFICATION

(11) **EP 2 455 752 B1**
(45) Date of publication and mention of the grant of the patent: **29.01.2014**
(21) Application number: 11008001.7
(22) Date of filing: 03.10.2011
(51) Int. Cl.: G01N 27/84, G01N 21/956

(54) **Equipment for detection of defects in rotary metal bodies by a magnetic powder method**
Ausrüstung zur Erkennung von Fehlern in drehbaren Metallkörpern durch eine Magnetpulververfahren
Équipement de détection des défauts dans les corps métalliques rotatifs par un procédé de poudre magnétique

(30) Priority: 19.11.2010 CZ 20100852
(43) Date of publication of application: 23.05.2012
(73) Proprietor: Starman, Stanislav, 14000 Praha 4 (CZ)
(72) Inventor: Starman, Stanislav, 14000 Praha 4 (CZ)
(74) Representative: Reichel, Pavel

(56) References cited:
- EP-A2- 0 088 230
- CN-A- 1 056 581
- JP-A- 6 300 739
- JP-A- 7 253 412
- US-A- 5 047 851
- US-A- 5 534 775
- DATABASE WPI Week 200402 Thomson Scientific, London, GB; AN 2004-017617 XP002672222, & JP 2003 344359 A (SUMITOMO METAL IND LTD) 3 December 2003 (2003-12-03)
- DATABASE WPI Week 199735 Thomson Scientific, London, GB; AN 1997-376189 XP002672223, & JP 9 159650 A (NIPPON STEEL CORP) 20 June 1997 (1997-06-20)
- DATABASE WPI Week 201064 Thomson Scientific, London, GB; AN 2010-L50245 XP002672224, & CN 101 806 774 A (SHEYANG SAIFU DEFECT DETECTION EQUIP MFG CO LTD) 18 August 2010 (2010-08-18)
- DATABASE WPI Week 200778 Thomson Scientific, London, GB; AN 2007-837921 XP002672225, & JP 2007 298482 A (NIPPON DENJISOKUKI KK) 15 November 2007 (2007-11-15)

## Description

### Field of the invention

The object of this invention is testing equipment designed to detect and localise variously oriented surface defects in rotary metal objects, particularly railway wheels and discs, by means of a magnetic powder method on their surface and areas closely under the surface.

### Description of the prior art

The magnetic powder method is one of the broadly used methods for checking surfaces of various products made of ferromagnetic materials. It is based on the principle of dispersion fields where the magnetic field rises above the surface of the tested product. In this way, the detected defect can be highlighted by means of a suitable agent, such as a dry magnetic powder or suspension of magnetic powder in water. The magnetic powder method is used not only for highlighting surface defects of the tested product. It also identifies non-homogeneity closely under the surface, but not connected with the surface. To detect surface defects of a metal material by the powder method, an operator performs a visual evaluation of the defects. The existing devices do not allow utilisation of the operator's inspection and cameras simultaneously. Magnetisation is produced by a cage coil which is lifted after the magnetisation so that the defects on the tested metal object, e.g. a railway wheel, can be visually monitored. An axial magnetisation is produced by ferromagnetic pole adaptors from the sides of the wheel. Although they reduce the power demand, a radial magnetisation still requires a power supply of approximately 8,000 A.

Due to the proximity of the pole adaptors to the tested metal object, these pole adaptors complicate the visual check of the tested object and need to be adjusted according to its size. The test is divided into two cyclesthe radial magnetisation is performed, then the coil is lifted and the check of the tested object is performed. Then the axial magnetisation follows and indications during this magnetisation are monitored on the travel surface of the wheel above the magnetising poles. If cameras with image recording are used, they do not allow automatic classification of detected defects. The inlet of an electric current by a contact method israther problematic and requires moveable conducting parts, also scanning system is problematic. As the tested object is during magnetisation shadowed in the presently used magnetising methods, the location of the cameras is complicated so that they could see the tested surface over the coil. At the same time there are requirements to test the metal object in its entirety when the testing is often spread into more cycles that involve axial magnetisation, lifting the coil, inspection, radial magnetising and an inspection during rotation.

The technique of inspecting the entire surface of tested objects for defects and corresponding apparatus is described in the document JP 2003 355359A. The magnetic particle inspection apparatus is provided with the current penetration electrode that is inserted in the shaft hole of an annular body and energizes the DC current. The apparatus further includes magnetization coils that are oppositely arranged on both the sides of the annular body and energize the AC current, and a nozzle for spraying the magnetic particle liquid to the annular body. The defects in any direction on the entire surface of the material to be inspected can be quickly detected.

In another document, JP 6 300739A, a fluorescent magnetic-particle liquid is sprayed uniformly on a material to be inspected, which has been magnetized respectively in the circumferential direction and the axial direction by an interpole-type magnetizer and a through-type magnetizer and an excess magnetic-particle liquid is purged. Then, a fluorescent magnetic particle which has adhered to a flaw part is made luminescent by an ultraviolet lamp, its light is imaged by a color ITV camera, the image is converted into an electric signal, and the electric signal is transmitted to a color image processing device where the flaw part is extracted on the basis of a lightness signal. On the basis of a measured value, a signal processing part finds the final harmfulness degree of the flaw, and it displays the position, shape and depth of the flaw as a graphic form.

It is an objective of this invention to provide an improved equipment for detection of defects in rotary ferromagnetic metal objects, preferably railway wheels, by means of a powder method where the magnetic fields of coils for axial and radial magnetization can be adjusted independently and in only one working cycle which would increase the productivity of measurement. Further object of this invention is to make visible the defects having any orientation, shape and topology, with uniform sensitivity for amplitude of the defect.

### Summary of the invention

The subject if the invention involves an equipment for detection of defects in rotary ferromagnetic metal objects, particularly railway wheels or discs, by means of a powder method comprising a magnetising section with magnetising coils for radial and axial magnetisation, and demagnetisation of the tested object, and further comprising a manipulator of the tested object, where the magnetising section is followed by a defect detection section with an optical system for visualisation of its surface and subsurface defects, where there is at least one main fixed magnetising coil for radial magnetisation without any moveable parts arranged outside the perimeter of the tested rotary object, and at least two fixed auxiliary shaped lateral air-core magnetising coils for axial magnetisation. According to the invention thefixed auxiliary shaped lateral air-core magnetising coils are spacially shaped in a basically cylindrical or helical configuration and are symmetrically arranged on the sides orthe circumference of the tested object in such a distance from the surfaces of the tested object, so that they allow for a manipulation with the tested object without their shifting, and wherein the optical system includes luminous sources, formed by CCD cameras or LED matrix sources in the ultraviolet part of the spectrum or visual inspection and positioned on moveable tables along one or both sides of the tested object which are adapted for shifting into a required position on the tested object.

The air-core magnetising coils can exceed the dimensions of the tested object and arespacially shaped in a basically cylindrical or helical configuration. They are symmetrical inorder to allow for magnetising of the surface of both sides of the tested object with the sameMagnetic field. These coils need not be adjusted with regard to the size of the tested objects and can be positioned in such a way that it does not hinder monitoring of the surface visually or with CCD cameras as well as their combination.

The air-core magnetising coils can be connected in a series or parallel, or are supplied from various phases so that their mutual shift in the axis of rotation of the tested object produces a rotary vector of the magnetic field in the circumferential area of the tested object. The rotary vector can partially suppress the sensitivity of displaying artifacts, for example when the fluorescent powder sticks to a groove after machining of the railway wheel which is not a defect and is hardly discernable from a real defect. The supply of the air-core magnetising coils can be the same as of the main magnetising coil, the effect of which is a more homogeneous magnetisation of an uneven surface of the tested object.

There can be two main magnetising coils which are mutually turned, in the axis of rotation of the tested object, at an angle in the range from 30° to 45°. That allows for more homogeneous magnetisation of the surface in various directions.

The luminous sources can be fixed, whereby at least one of them is situated in the direction of the circumferential area of the tested object and the remaining sources on either side of the tested object. They can be equipped with a processor for creating and processing recorded unblurred images during rotation of the tested object that are transferred into a computer. The LED matrix sources can be positioned directly on the body of a camera. The cameras can scan the surface of the tested object statically - then, a larger area of the object must be illuminated, or dynamically during a continuous or successive rotation of the tested object. The data are displayed on the monitor for the operator and archived and defects are marked which the evaluating system can identify are specified and the unidentified defects are submitted to the operator for manual evaluation. The camera can have a lighting unit positioned on its body in such a way that eliminates reflexes from the surface of the tested object to the camera during successive rotation.

The equipment further comprises height-adjustable thrust members, such as pulleys for fixing the position of the tested object. The magnetising section of the equipment can be integrated with the defect detection section into a single unit. The input of the magnetising section can be connected to a section for cleaning the surface of the tested object. The defect detection section can be followed by a section for demagnetisation and washing the tested object.

### Brief description of the drawings

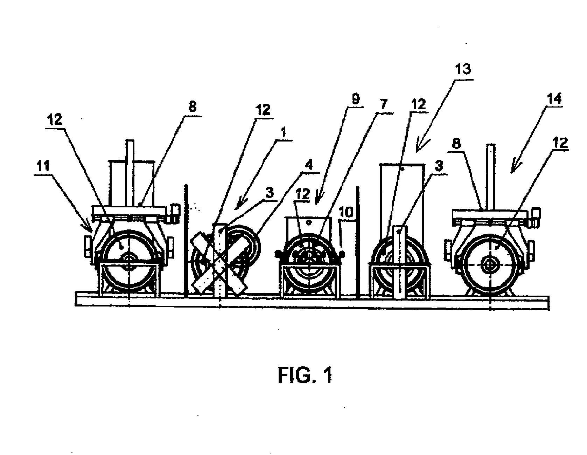

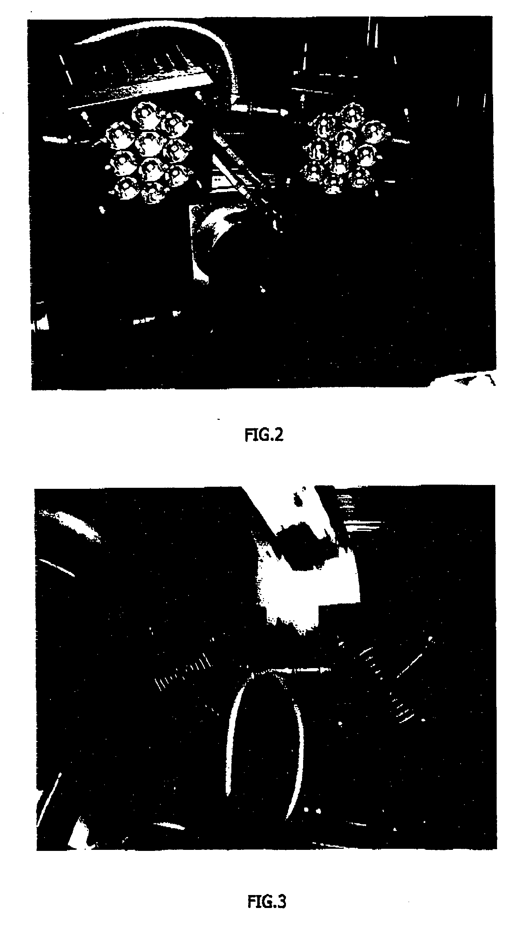

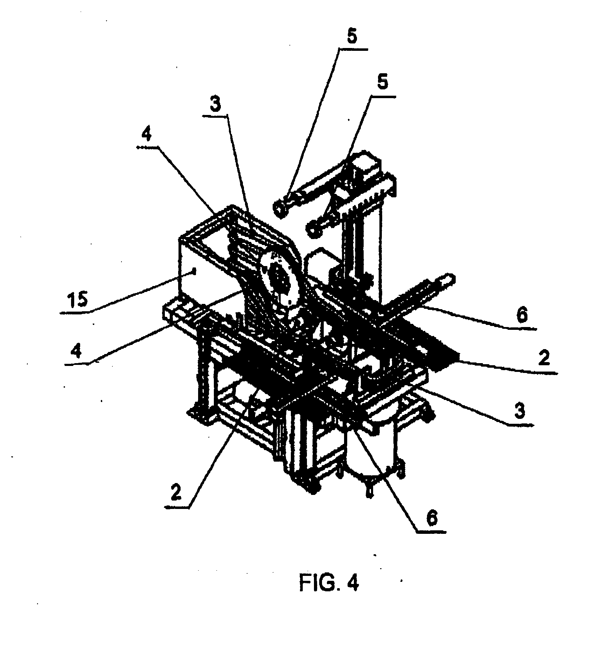

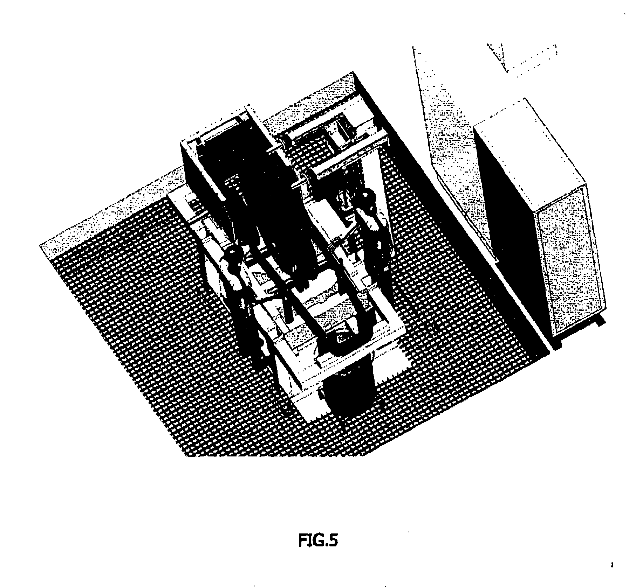

The attached drawings show examples of the equipment according to this invention. Fig. 1 Illustrates the main sections of the equipment, while Fig. 2 shows photo of the luminous source with the LED matrix sources situated directly on the body of the camera. Fig. 3 shows a photo of a tested railway wheel illuminated by the luminous source according to Fig. 2. Fig illustrates an alternative design involving a magnetising section integrated with the defect detection section, and Fig. 5 shows a top view of the design shown in Fig. 4.

### Examples of preferred embodiments

The testing apparatus for detecting defects in rotary metal objects by a magnetic powder method on the surface and areas close under the surface to a depth of several millimetres can be divided into several workplaces that can be variously combined or can form a singlecombined unit. The main parts comprise a section 11 for cleaning the surface of the rotarymetal object before its testing, the magnetising section 1, a defect defection section 9 for defect detections by means of CCD cameras, LED matrix sources in the ultraviolet part of thespectrum or visually as well as their combination, section 13 for demagnetisation and washing of the tested object 12 and section 14 for manipulation and marking of the defects. This example describes the testing equipment that is divided into several workplaces or sections engaged in detection of surface and sub-surface defects in tested objects 12, represented by railway wheels. It is based on emission of an electromagnetic field and successive magnetisation of the railway wheel. The surface of the railway wheel is washed by running or pressurised water, steam or ultrasound before the testing. The railway wheel is clamped into a horizontal or vertical position in the magnetising section 1 by a manipulator 8, or by rolling along a supporting rail or by a carriage. It can also be positioned under such anan angle that facilitates attachment inside one to three magnetising coils 3. If there is a singlemain magnetising coil 3, the railway wheel must rotate during the magnetisation so that each point on its surface is magnetised in more directions and variously oriented defects on itssurface can be monitored. If two main magnetising coils 3 are used, they are positioned in a way that does not hamper a transport of the tested railway wheel and its manipulation. Bothmain magnetising coils 3 are positioned in the axis of rotation of the tested railway wheel and are mutually shifted at an angle in the range of 30° to 45°. Use of three mutually shifted magnetising coils 3 provides more homogeneous magnetisation of the surface of the testedobject 12 in various directions.

The main magnetising coil (or coils) 3 is several-fold broader than the width of the inserted railway wheel and, due to its large size, a partially homogenous magnetic field is reached in a greater distance around them as opposed to a scattered field. The centre (axis) of the railway wheel can thus be positioned higher than the top of the main magnetising coil 3. Placing the wheel above the wide main magnetising coil 3 instead of using a higher magnetising current allows usage of a main fixed magnetising coil 3 with no moveable parts. In this way, the area of the wheel above its centre is not overshadowed, so that the visual check of surface defects, as well as scanning of the image by cameras, can proceed simultaneously.

The main magnetising coil (or coils) 3 is supplied either via a transformer reducing the voltage to a safe value, e.g. 24 V (it is then more easily cooled and the demands for electric insulation are not so high), or it is supplied directly from the three-phase power supply network via a control unit (the number of its spires is then higher and the insulation must conform to stricter safety regulations).

There are two lateral magnetising air-core coils 4 at either side of the railway wheel in the magnetising section 1. They both exceed the travel surfaces of the railway wheel from the smallest to the largest diameter. These auxiliary magnetising coils 4 can be arranged as lateral air-core cylindrical or spiral coils or a system of these coils around the perimeter of the tested object 12 (in this case, the tested object (railway wheel) need not turn during magnetisation). They are used for axial magnetisation of the circumferential surface of the tested object 12, i.e. magnetisation of the travel surface of the railway wheel or, in general terms, homogenisation of the magnetisation of the tested surface if the shape is more complicated. They can be at such a distance from the surface of the tested object that they need not be moved during manipulation with this object. The auxiliary magnetising coils 4 can be connected in a series or parallel, or they can be supplied from various phases and their mutual shift in the axis of rotation of the tested railway wheel can produce a rotary vector of the magnetic field on the circumferential surface of the object. To create the rotary vector of magnetisation, alternating current with a shifted phase is conducted into the coils, most easily from two phases of a three-phase power supply. This creates rotation of the magnetising vector in one half of the railway wheel where the fluid with fluorescent magnetic powder is poured or sprayed. This method facilitates production of a more homogenousmagnetic field on the surface of the tested object 12, possibly even without the main operating coil or with potential additional independent adjustment of magnetisation on the circumference of the tested object 12.

Due to rotation of the railway wheel during magnetisation and the shift phase of the currents in the radial and axial magnetising coil (the main coil 3 and auxiliary coil 4), the equipment can display defects in 360° under any angle. The rotary vector can partially suppress the sensitivity of monitoring artifacts, for example when the fluorescent powder sticks to a groove left by machining of the railway wheel, not being a defect. This condition is hardly discernable from a real defect. Each of the auxiliary magnetising coils 4 has three spires and both coils are symmetrical so that the railway wheel is magnetised by the same magnetic field from both sides. Power supply of the auxiliary magnetising coils 4 is identical with the main magnetising coil 3 which produces a more homogeneous magnetisation of an uneven surface. Axial and radial magnetisation that must proceed simultaneously so that defects marked during one orientation of the magnetic field are not washed off in the second cycle of magnetisation, uses the phase shift of electric currents in both coils, that is radial as well as axial coil.

During magnetisation, the surface of the railway wheel is wetted with liquid containing fluorescent powder which is polarised by the magnetic flow. The fluorescent powder is applied to the surface of the railway wheel by pouring during rotation or is sprayed by nozzles. This powder can be used mixed with liquid or dry. The powder is concentrated in the defective area and the density of the induction lines rises.

The tested object 12 (the railway wheel) then moves to the next workplace, the defectdetection section 9, that is monitoring of defects by luminous sources 10, e.g. CCD cameras or LED matrix sources in the ultraviolet part of the spectrum or visually, as well as their combination. Illumination of the surface of the railway wheel by a source of light in the corresponding spectrum highlights the defects on the surface of the wheel and allows easy observation. Highlighted surface defects can be detected by observation of the surface of the railway wheel with the naked eye and the operator determines whether the detected area is to be classified as a defect. Another method regards automatic scanning of the surface of the railway wheel by, for example, a CCD camera which includes methods of signal and image processing. The detected defects are automatically marked and the operator is notified of a potential detection of a defect. It is up to the decision of the operator whether he marks the detected defect or not. The equipment can be operated manually or by computer, automatically without the operator's intervention. There can be two CCD cameras which change their position so that they cover the entire tested objects with their image. Alternatively, the CCD cameras can be fixed and their number higher, e.g. nine, at least onein the direction of the circumferential area of the tested object 12 (i.e. travel surface of the railway wheel), the others along either side. The higher number of cameras is usually determined by a more complicated surface on the tested object 12. For a flat object, a single camera at the side may suffice. The cameras can be arranged in a line (for a simple shape of the object) or radially (the camera groups are slightly turned in the axis of rotation of the tested object 12 to eliminate a collision of their positions).

Usage of LED matrix sources in the ultraviolet part of the spectrum produces homogenous illumination of the tested object 12 without reflections. The brightness level of individual points or groups (in columns) can be adjusted to achieve homogenous illumination of the surface. The luminous sources can be positioned independently of the camera positions, or they can be placed directly on top of individual cameras and move together with the movement of the camera. Homogeneity of illumination is important for distinguishing a real defect, e.g. crack in the surface from artifacts that are produced during machining of the tested material.

In section 13 for demagnetisation and washing of the tested object 12 the tested object is demagnetised and washed if required. The main magnetising coil 3, which is used here for demagnetisation, can be slightly turned to allow for vertical manipulation with the tested object 12 - the railway wheel. If it is not possible,_it is succeeded by section 14 for manipulation and marking of the defects.

In an alternative design illustrated in Figs. 4 and 5 the equipment contains a screen 15 in which the railway wheel is inserted. The screen 15, shaped as a stainless steel block, is used for housing the wheel and drainage of the liquid containing fluorescent powder back into a container located underneath. The bottom of the screen 15 is shaped as a funnel for better drainage of the liquid back to the tank. The screen 15 contains two rotary guides 2 (wheels) on a shaft into which the railway wheel is inserted from the top by a manipulator (not illustrated). After seating the wheel, thrust elements 5 (pulleys) fit it from the top. In this way, the area of the wheel above its centre is not overshadowed, so that the visual check of surface defects, as well as scanning by cameras, can proceed simultaneously.

The railway wheel is placed vertically on the guides 2 (wheels) in the screen 15, but it can be also positioned at an angle to facilitate its attachment inside one or more of the main magnetising coils 3. If there is a single main magnetising coil 3, the railway wheel must rotate in the screen 15 so that each point of its surface is magnetised in more directions and variously oriented defects on its surface can be monitored.

The equipment has two CCD cameras for scanning the surface of the railway wheel. They are located on moveable tables 6 which allow movement of the cameras into any position on the railway wheel. The cameras are equipped with UV lamps or LED sources of UV light which emit light only in a certain part of the spectrum, e.g. 365 nm. The cameras change their position in order to cover the entire tested object. If the railway wheel is covered with fluorescent liquid and magnetised, the illumination highlights the defects on the surface of the wheel and they can be easily detected. The cameras are equipped with a processor that processes the recorded images in a resolution of 1280 x 1024 points. The processing methods ensure recording of an unblurred picture during rotation of the railway wheel. The recorded picture is transferred to a computer and displayed in a suitable programme. In the initial position, the cameras are parked and the tables 6 are located in the lower position. If a command for calibration of cameras is issued, they are automatically moved to a calibrating area which contains a sample. To start the testing, the cameras must be calibrated before each testing of a new object. The calibration is based on a clear, unblurred image of the calibration mark on the computer screen. The cameras scan the entire surface of the railway wheel. As the camera only scans 10 cm of the length of the railway wheel, the number of zones in which the camera records the picture is automatically adjusted after reading the diameter of the wheel. The individual zones overlap. If the camera detects a defect on the surface of the railway wheel, the wheel rotation is automatically stopped and the detection is reported to the operator. The coordinates with the defect are recorded and sent to the computer where everything is stored together with the coordinates in a database. Then the operator immediately visually checks the defect area and determines whether it is a defect or not.

After the test, the object is demagnetised by the same magnetising coils 3, 4 if required. The tested object can then be washed and transferred and the defects can be marked.

### List of reference numerals

- 1: magnetising section
- 2: guides
- 3: main magnetising coil
- 4: auxiliary magnetising coils
- 5: thrust elements
- 6: moveable tables
- 7: optical system
- 8: manipulator
- 9: defect detection section
- 10: luminous sources
- 11: section for cleaning the surface of the tested object
- 12: tested object
- 13: section for demagnetisation and washing of the tested object
- 14: section for manipulation and marking of defects
- 15: screen

## Claims

1. Equipment for detection of defects in rotary ferromagnetic metal objects *particularly railway* wheels or discs, by means of a powder method comprising a magnetising section (1) with magnetising coils (3, 4) for radial and axial magnetisation, and demagnetisation of the tested object (12), and further comprisinga manipulator (8) of the tested object (12), where the magnetising section (1) isfollowed by a defect detection section (9) with an optical system (7) for visualisation of its surface and subsurface defects, where there is at least one main fixed magnetising coil (3) for radial magnetisation without any moveable parts arranged outside the perimeter of the tested rotary object (12) and at least two fixed auxiliary shaped lateral air-core magnetising coils (4) for axial magnetisation, **characterized in that** the fixed auxiliary shaped lateral air-core magnetising coils (4) are spacia//y shaped in a basically cylindrical or helical configuration and are symmetrically arranged on the sides or the circumference of the tested object (12) at such a distance from the surface of the tested object (12), so that they allow for manipulation with the tested object without their shifting, wherein the symmetrical air-core magnetising coils (4) are arranged in such a way so that they allow for magnetizing of the surface of both sides of the tested object (12) with the same magnetic field, and wherein the optical system (7) includes luminous sources (10), formed by CCD cameras or LED matrix sources in the ultraviolet part of the spectrum or visual inspection and positioned on moveable tables (6) along one or both sides of the tested object (12) which are adapted for shifting into a required position on the tested object (12).

2. The equipment according to Claim 1, **characterized in that** the air-core magnetising coils (4) are connected in a series or parallel, or are supplied from various phases so that their mutual shift in the axis of rotation of the tested object (12) produces a rotary vector of the magnetic field in the circumferential area of the tested object (12).

3. The equipment according to Claim 1, **characterized in that** the supply of the air-core magnetising coils (4) is the same as of the main magnetising coil (3).

4. The equipment according to Claim 1, **characterized in that** there are two main magnetising coils (2) which are mutually turned, in the axis of rotation of the tested object (12), *at* an angle in the range from 30° to 45°.

5. The equipment according to claim 1, **characterized in that** the luminous sources (10) are fixed, whereby at least one of them is situated in the direction of the circumferential area of the tested object (12) and the remaining sources (10) on either side of the tested object (12).

6. The equipment according to claim 1, **characterised in that** the LED matrix sources are positioned directly on the body of a camera.

7. The equipment according to claim 1, **characterized in that** the luminous sources (10) are equipped with a processor for creating and processing recorded unblurred images during rotation of the tested object (12) that are transferred into a computer.

8. The equipment according to claim 1, **characterised in that** it comprises height-adjustable thrust members, e.g. pulleys for fixing the position of the tested object (12).

9. The equipment according to claim 1, **characterised in that** the magnetising section (1) is integrated with the defect detection section (9) into a single unit.

10. The equipment according to claim 1, **characterised in that** the input of the magnetising section (1) is connected to a section (11) for cleaning the surface of the tested object (12).

11. The equipment according to claim 1, **characterised in that** the defect detection section (9) is followed by a section (13) for demagnetisation and washing the tested object (12).

## Patentansprüche

1. Gerät für die Mängelerkennung in rotierenden ferromagnetischen Metallobjekten, insbesondere für Rad- und Scheibensätze von Schienenfahrzeugen, mittels Pulvermethode, das aus einem magnetisierenden Bereich (1) mit Magnetisierungsspulen (3, 4) für die radiale und axiale Magnetisierung und Entmagnetisierung des Prüfobjektes (12) besteht und das des Weiteren aus einem Manipulator (8) für das Prüfobjekt (12) besteht, bei dem sich an den magnetisierenden Bereich (1) ein Bereich für die Mängelerkennung (9) mit einem optischen System (7) anschließt, das der Visualisierung von Mängeln auf und unter der Objektoberfläche dient, bei dem es mindestens eine feste magnetisierende Hauptspule (3) für die radiale Magnetisierung gibt, die keine beweglichen Teile aufweist und außerhalb des Umfangs des rotierenden Prüfobjektes (12) angebracht ist, und bei dem es mindestens zwei feste, seitliche, magnetisierende, als Hilfsspulen geformte Spulen (4) ohne Eisenkern für die axiale Magnetisierung gibt, das sich dadurch auszeichnet, dass darin die festen, seitlichen, magnetisierenden, als Hilfsspulen geformten Spulen (4) ohne Eisenkern eine im Wesentlichen zylinderförmige oder spiralförmige, räumliche Gestalt haben und symmetrisch an den Seiten der Peripherie des Prüfobjektes (12) angebracht sind, wobei deren Entfernung von der Oberfläche des Prüfobjektes (12) die Manipulation des Prüfobjektes ermöglicht, ohne dass sie sich dabei verschieben, dass darin die symmetrischen Magnetisierungsspulen ohne Eisenkern (4) derart angebracht sind, dass sie die beidseitige Magnetisierung des Prüfobjektes (12) mittels desselben Magnetfeldes ermöglichen, und dass darin das optische System (7) Leuchtquellen (10) beinhaltet, die durch CCD-Kameras oder LED-Matrix-Quellen im ultravioletten Bereich des Lichtspektrums oder der visuellen Überprüfung gebildet werden und die seitlich einer oder beider Seiten des Prüfobjektes auf (12) bewegbaren Tischen (6) angebracht sind, die sich in eine gewünschte Position am Prüfobjekt (12) verschieben lassen.

2. Das Gerät nach Anspruch 1, dadurch ausgezeichnet, dass die Magnetisierungsspulen (4) ohne Eisenkern in Reihe oder parallel zueinander geschlossen sind oder von unterschiedlichen Phasen gespeist werden, sodass deren gemeinsames Verschieben auf der Rotationsachse des Prüfobjektes (12) einen Rotationsvektor des Magnetfeldes im Umfangsbereich des Prüfobjektes (12) bildet.

3. Das Gerät nach Anspruch 1, dadurch ausgezeichnet, dass die Versorgung der Magnetisierungsspulen (4) ohne Eisenkern dieselbe wie auch die der Hauptmagnetisierungsspule (3) ist.

4. Das Gerät nach Anspruch 1, dadurch ausgezeichnet, dass es zwei Hauptmagnetisierungsspulen (2) gibt, die beide auf der Rotationsachse des Prüfobjektes (12) in einem Winkel gedreht sind, der im Bereich zwischen 30° und 45° liegt.

5. Das Gerät nach Anspruch 1, dadurch ausgezeichnet, dass die Leuchtquellen (10) fest sind, wobei mindestens eine von ihnen sich in der Richtung des Umfangbereichs des Prüfobjektes (12) befindet und die übrigen Quellen (10) auf beiden Seiten des Prüfobjektes (12) sind.

6. Das Gerät nach Anspruch 1, dadurch ausgezeichnet, dass die LED-Matrixquellen direkt auf dem Gehäuse einer Kamera liegen.

7. Das Gerät nach Anspruch 1, dadurch ausgezeichnet, dass die Leuchtquellen (10) mit einem Prozessor ausgestattet sind, um Bilder während der Rotation des Prüfobjektes (12) zu erstellen und um aufgenommene, nicht verwackelte Bilder zu verarbeiten und an einen Computer zu versenden.

8. Das Gerät nach Anspruch 1, dadurch ausgezeichnet, dass es höhenverstellbare Schubstücke umfasst, z. B. Seilzüge, um die Position des Prüfobjektes (12) zu sichern.

9. Das Gerät nach Anspruch 1, dadurch ausgezeichnet, dass der magnetisierende Bereich (1) gemeinsam mit dem Bereich für die Mängelerkennung (9) zu einer einzigen Einheit zusammengefasst ist.

10. Das Gerät nach Anspruch 1, dadurch ausgezeichnet, dass der Eingang des magnetisierenden Bereichs (1) an den Bereich (11) für die Säuberung der Oberfläche des Prüfobjektes (12) angeschlossen ist.

11. Das Gerät nach Anspruch 1, dadurch ausgezeichnet, dass an den Bereich für die Mängelerkennung (9) ein Bereich (13) für die Entmagnetisierung und die Reinigung des Prüfobjektes (12) anschließt.

## Revendications

1. Équipement pour la détection des défectuosités des objets rotatifs en métal ferromagnétique, notamment des roues ferroviaires ou des disques, à l'aide d'une méthode à base de poudre qui comprend une section de magnétisation (1) avec bobines de magnétisation (3, 4) pour assurer la magnétisation radiale et axiale, une section de démagnétisation de l'objet testé (12) et un manipulateur (8) de l'objet testé (12). La section de magnétisation est suivie par une section de détection des défauts (9) avec un système optique (7) qui permet de visualiser les défauts de surface ou ceux qui se trouvent sous la surface. L'équipement est composé d'au moins une bobine fixe (3) de magnétisation radiale sans partie mobile, qui se trouve en face du périmètre de l'objet rotatif testé (12), et d'au moins deux bobines fixes latérales à noyau vide spécialement formées pour la magnétisation axiale. Ces deux bobines latérales de magnétisation (4) présentent une configuration cylindrique ou hélicoïdale, elles sont disposées de façon symétrique sur les côtés de la circonférence de l'objet testé (12) sachant que leurs distances par rapport à la surface de l'objet testé (12) sont telles qu'elles permettent de manipuler l'objet testé sans pour autant nécessiter un changement de place. Ces bobines symétriques de magnétisation (4) sont placées de façon à magnétiser la surface des deux côtés de l'objet testé (12) avec des champs magnétiques identiques. Le système optique (7) de la méthode comprend des sources de lumière (10) formées de caméras CCD ou de sources à matrice LED dans la partie ultraviolette du spectre ou d'inspection visuelle, positionnées sur des tables mobiles (6) sur l'un ou les deux côtés de l'objet testé (12). Ces tables sont adaptées pour être déplacées sur la position demandée par rapport à l'objet testé (12).

2. L'équipement selon la Revendication 1, **caractérisé en ce que** les bobines de magnétisation à noyau vide (4) sont connectées en série ou en parallèle ou sont alimentées depuis différentes phases pour que leur déplacement mutuel selon l'axe de rotation de l'objet testé (12) provoque un vecteur rotatif du champ magnétique dans la zone périphérique de l'objet testé (12).

3. L'équipement selon la Revendication 1, **caractérisé en ce que** la source d'alimentation des bobines à noyau vide (4) est identique à celle de la bobine principale de magnétisation (3).

4. L'équipement selon la Revendication 1, **caractérisé en ce qu'**il comprend deux bobines principales de magnétisation (2) mutuellement décalées d'un angle compris entre 30° et 45° selon l'axe de rotation de l'objet testé (12).

5. L'équipement selon la Revendication 1, **caractérisé en ce que** les sources de lumière (10) sont fixes, sachant qu'au moins l'une d'elles est placée dans la direction de la circonférence de l'objet testé (12) et que les sources restantes (10) sont dirigées vers les deux côtés de l'objet testé (12).

6. L'équipement selon la Revendication 1, **caractérisé en ce que** les sources à matrice LED sont positionnées directement sur le corps de la caméra.

7. L'équipement selon la Revendication 1, **caractérisé en ce que** les sources de lumière (10) sont équipées d'un processeur permettant de créer et de traiter les images non floues qui ont été enregistrées pendant la rotation de l'objet testé (12) et qui sont transférées dans un ordinateur.

8. L'équipement selon la Revendication 1, **caractérisé en ce qu'**il comprend des organes d'avancement réglables en hauteur, comme par exemple des poulies permettant de déterminer la position de l'objet testé (12).

9. L'équipement selon la Revendication 1, **caractérisé en ce que** la section de magnétisation (1) est intégrée avec la section de détection des défauts (9) dans une seule unité.

10. L'équipement selon la Revendication 1, **caractérisé en ce que** l'entrée de la section de magnétisation (1) est connectée à la section (11) pour le nettoyage de la surface de l'objet testé (12).

11. L'équipement selon la Revendication 1, **caractérisé en ce que** la section de détection des défauts (9) est suivie de la section (13) de démagnétisation et de lavage de l'objet testé (12).
